# EUROPEAN PATENT APPLICATION

(11) **EP 1 564 922 A2**
(43) Date of publication of application: **17.08.2005**
(21) Application number: 04013453.8
(22) Date of filing: 08.06.2004
(51) Int. Cl.: H04J 14/02

(54) **Signal transceiving method for use in optical ring network and optical node for the same**

(30) Priority: 17.02.2004 JP 2004040167
(71) Applicant: FUJITSU LIMITED, Kawasaki-shi, Kanagawa 211-8588 (JP)
(72) Inventor: Nakagawa, Goji c/o FUJITSU LIMITED, Kawasaki-shi, Kanagawa 211-8588 (JP)
(74) Representative: Kreutzer, Ulrich, Dipl.-Phys.

(57) **Abstract**

On each client nodes, 1-2, 1-3, 1-4, the same downstream signal at an identical wavelength is selectively received by one drop port, and an upstream signal at a specific wavelength of λ0 is sent to the optical ring network by one add port. On a single node 1-1, which serves as a server node, the upstream signals sent, one from each of the client nodes at the specific wavelength of λ0, is received by one and the same drop port in a time division manner. This arrangement makes it possible for the server node, the sender of multicast or broadcast distribution, to correctly receive an ACK signal according to IP, so that bi-directional communication becomes available between the sender (server) node, which initiates the multicast or broadcast communication, and other receiver (client) nodes.

## Description

### BACKGROUND OF THE INVENTION

### (1) Field of the Invention:

The present invention relates to a method for transceiving signals in an optical ring network, and the invention also relates to an optical node for use in the network. The invention relates particularly to a technology suitable for use in a ring network on which WDM (Wavelength Division Multiplex) optical signals are transmitted.

### (2) Description of the Related Art:

With recent explosive growth in demand for data communication, centering on Internet traffic, very-long-distance back born networks with large capacity have been desired. In addition, a great variety of services accessed by users have necessitated development of economical networks with high reliability and flexibility.

As optical communication networks, in particular, play a most important role in attempts to develop foundations for information communication networks, they are expected to be installed over an even wider area and to provide even more sophisticated service. Such optical communication networks have been rapidly developed, with an eye on information-oriented society in the near future. Here, WDM is one of the core technologies widely used in optical transmission systems. In WDM, light signals at different wavelengths are multiplexed so that more than one signal is transmitted by means of a single optical fiber.

OADM (Optical Add Drop Multiplex) control is carried out on optical nodes that perform WDM transmission, whereby a light signal at a specific wavelength is split off (dropped) or inserted (added), without converting the light signal into an electric signal, for the purpose of executing various kinds of processing on an individual optical path within a range of light wavelengths.

In order to realize such OADM, a variable-wavelength filter for selecting a desired wavelength that can be varied is required, and as such a variable-wavelength filter, an AOTF (Acousto-Optic Tunable Filter) has been widely used.

The AOTF induces refractive index change in an optical waveguide by acousto-optic effect (light is diffracted by a sound wave excited inside or on the surface of a substance), and a polarized wave of light propagated on an optical waveguide is rotated to isolate/select a spectral element, thereby filtering a desired wavelength. Since a wide range of tuning is available in the AOTF by varying an RF (Radio Frequency) value, the AOTF is regarded as an important device for establishing OADM.

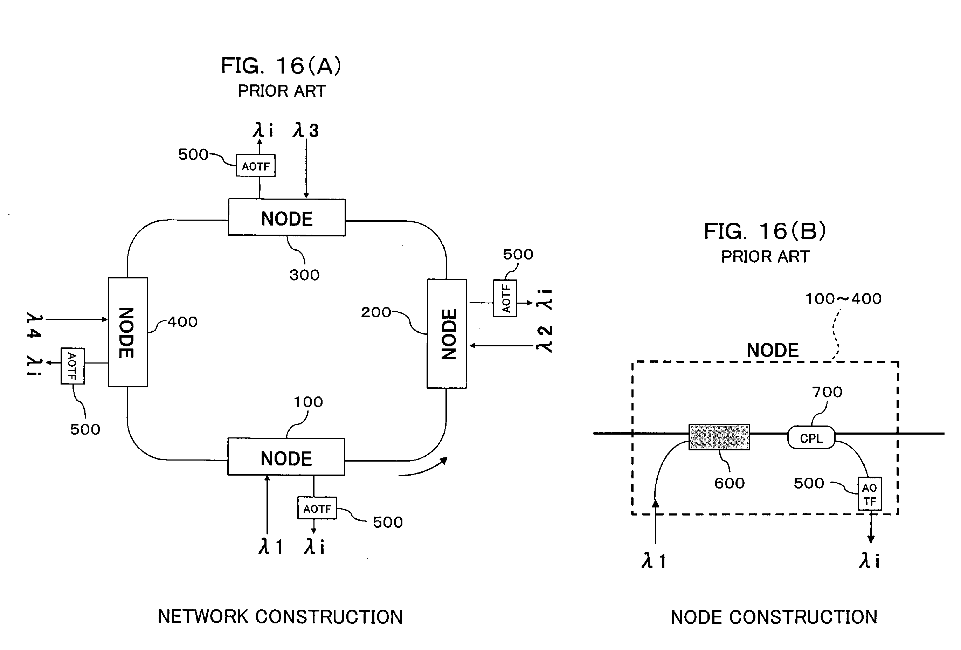

FIG. 16(A) shows a whole network construction of a previous optical WDM ring network, and FIG. 16(B) shows a construction of an optical add and drop multiplex (OADM) node disposed in this network. The network of FIG. 16(A) includes four OADM nodes (optical nodes), 100, 200, 300, and 400, connected via an optical transmission path to form a ring-shaped network. On the OADM nodes, 100, 200, 300, and 400, light signals (add light) at wavelengths (add wavelengths) of λ1, λ2, λ3, and λ4', respectively, are added onto the WDM ring network (hereinafter will be simply called the "ring network"). In addition, on each of the OADM nodes, 100, 200, 300, and 400, the AOTF 500 splits off a light signal (drop light) at an arbitrary wavelength of λi (i = 1 through 4), other than the add wavelength of the individual node.

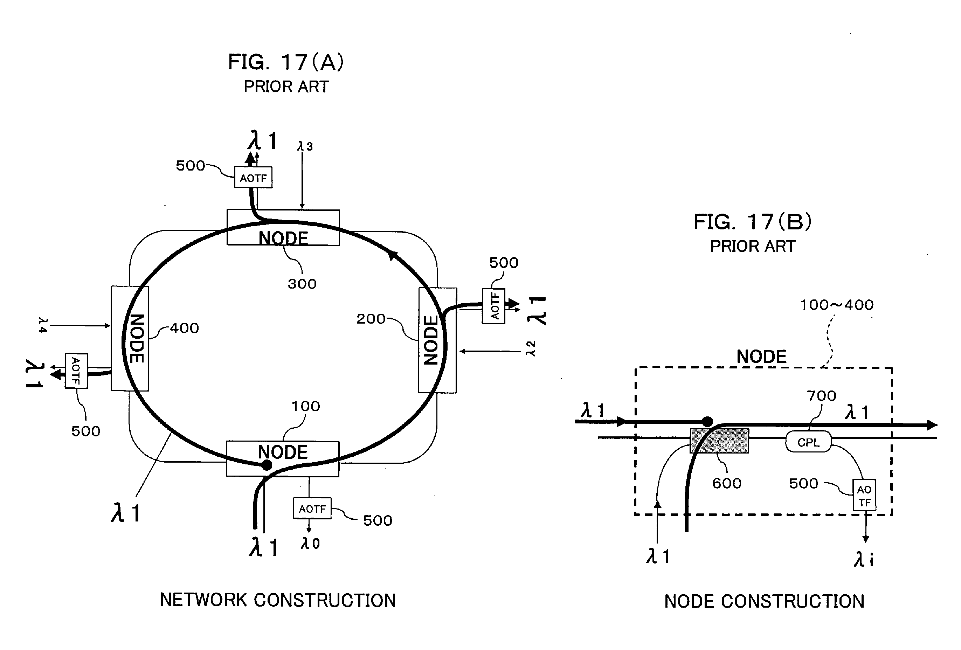

As shown in FIG. 16(B), on each node, 100, 200, 300, and 400, a rejection add filter 600 is used to insert add light, while an optical coupler (CPL) 700 is used to split the power of WDM signals at all the wavelengths, and the drop light then passes through the AOTF 500 at which a desired wavelength is selected. As shown in FIG. 17(A), light at a wavelength of λ1, which has been added by the node 100, is transmitted to the nodes, 200, 300, and 400, in this order, and all these nodes can drop the light at a wavelength of λ1. Here, as shown in FIG. 17(A) and FIG. 17(B), the light at a wavelength of λ1, which has been added by the node 100, travels around the ring network, and is then terminated (removed) by the rejection add filter 600 on the node 100, so that the add light is prevented from continuously circulating around the ring network.

In this manner, communication between arbitrary nodes is available in the ring network. More precisely, each node is assigned a transmission wavelength of its own, and the variable-wavelength filter 500 selects a wavelength to be received, thereby selecting a node to communicate with. Since this method makes it easy to set connection paths in units of hours or minutes, it is useful for providing networks suitable for communication path rental (channel rental) by the hour.

Further, since the individual nodes receive one and the same wavelength, multicast communication and broadcast communication, in which one transmission signal should be received at more than one site and by all the nodes, respectively (see FIG. 17(A)), becomes available. This network, therefore, is good for image (including both motion pictures and static picture images) delivery and broadcast service, which are expected to expand in the near future.

The following patent documents 1 and 2 propose technologies relating to such ring networks. Patent document 1 discloses a construction of a WDM optical ring network with more than one optical add and drop multiplex nodes having an add port to which a certain wavelength has previously been assigned and a drop port for selecting an arbitrary wavelength. Patent document 2 discloses a filter, disposed on the ring line of a WDM ring network, for removing light at a predetermined wavelength, thereby preventing signals from continuously circulating around the network.
[Patent Document 1] Japanese Patent Laid-Open No. SHO 55-165048
[Patent Document 2] Japanese Patent Laid-Open NO. HEI 10-112700

However, as shown in FIG. 17(A), such a previous ring network has the following problem: when multicast or broadcast communication is carried out in the network, signals flow in only one direction. As for some transmission protocols, multicast communication is available even with the arrangement of FIG. 17(A). However, under the Internet Protocol (IP), which has recently been increasingly used, it is impossible to perform multicast communication as illustrated in FIG. 17(A).

That is, under the IP, the sender of multicast data must receive an acknowledgment (ACK) signal, indicating receipt of multicast communication data. In the construction of FIG. 17(A), however, since such ACK signals vary in wavelength and time with their senders, it is impossible for the multicast data sender node to receive such ACK signals correctly by using one and the same port, so that IP multicast or broadcast communication is unavailable in the construction of FIG. 17(A). More precisely, as shown in FIG. 17(A), the node 100 sends a light signal at a wavelength of λ1, which is then received on the node, 200, 300, and 400, through the same port, by controlling the AOTF 500 to select the wavelength of λ1. In contrast to this, on the node 100, signals sent from the nodes, 200, 300, and 400, at their unique wavelengths of λ2, λ3, and λ4, respectively, cannot be received by a single port.

Accordingly, the previous construction has another problem in that image delivery or broadcast service by IP signals is unavailable on an optical layer.

With the foregoing problems in view, it is an object of the present invention to make it possible for an optical node, serving as a sender of multicast or broadcast distribution, to receive ACK signals properly, thereby realizing bi-directional communication between the sender (server) node, which is the origin of the multicast or broadcast communication, and other receiver (client) nodes.

### SUMMARY OF THE INVENTION

In order to accomplish the above object, according to the present invention, there is provided a signal transceiving method for use in an optical ring network to which more than one optical nodes, each with a plurality of add ports and drop ports, are connected, one of which optical nodes serves as a server node for sending a downstream signal to other nodes, which serve as client nodes. The method comprises the steps of: on the individual client nodes, selectively receiving the same downstream signal at an identical wavelength through one of the plural drop ports; sending an upstream signal at a specific wavelength to the optical ring network through one of the plural add ports; and on the server node, receiving such upstream signals sent, one from each of the client nodes at the specific wavelength, through a single one of the drop ports in a time division manner.

As one preferred feature, on the individual client nodes, the upstream signals are sent in pre-allocated time slots at a node-common wavelength, which is assigned as the aforementioned specific wavelength. On the server node, the upstream signals at the node-common wavelength are selectively received, and the upstream signals in the pre-allocated time slots are received by the foregoing single drop port. In addition, the method further comprises the step of blocking light at the node-common wavelength, on the server node.

As another feature, on each of the client nodes, the upstream signal is sent in a time slot, which is pre-allocated to the individual client node, at a node-unique add wavelength, which is assigned as the aforementioned specific wavelength, the add wavelength being unique to the individual client node. In addition, on the server node, the wavelengths, each to be selectively received by the single drop port, are switched in synchronization with the time slots so as to receive the upstream signals, which are sent from the client nodes at the node-unique add wavelengths, through the single drop port in a time division manner.

As a generic feature, there is provided an optical node with a plurality of add ports and drop ports, for use as a server node in an optical ring network to which more than one such optical nodes are connected as client nodes. The optical node comprises: a sender means which sends a downstream signal at a node-unique add wavelength through one of the plural add ports, the node-unique add wavelength being unique to the individual optical node; and a receiver means which receives upstream signals sent, one from each of the client nodes at a specific wavelength, through a single one of the drop ports in a time division manner.

As one preferred feature, the receiver means includes: a wavelength selecting unit for selecting a wavelength of light to be received through the single drop port; and a node-common add-wavelength time-division receiving unit for time-divisionally receiving, through the single drop port, the upstream signals sent in pre-allocated time slots from the client nodes at a node-common wavelength, in response to selecting the node-common wavelength by the wavelength selecting unit, the node-common wavelength being assigned, as the aforementioned specific wavelength, to all the optical nodes in common.

As another preferred feature, the receiver means includes: a wavelength selecting unit for selecting a wavelength of light to be received through the single drop port; and a wavelength time-division selection receiving unit for time-divisionally receiving, through the single drop port, the upstream signals sent in pre-allocated time slots from the client nodes at the node-unique add wavelengths, each of which is assigned as the aforementioned specific wavelength, in response to selecting such node-unique add wavelengths by the wavelength selecting unit in synchronization with the time slots.

As still another generic feature, there is provided an optical node with a plurality of add ports and drop ports for use as a client node in an optical ring network, which optical node comprises: a receiver means which selectively receives a downstream signal at an arbitrary wavelength through one of the plural drop ports; and a sender means which sends, through one of the plural add ports, an upstream signal at a specific wavelength to the optical ring network, using a time slot pre-allocated to the client node.

As a preferred feature, the sender means includes a node-common add wavelength time-division sending unit for sending, through the one of the add ports, the upstream signal at a node-common wavelength, which is common to all the optical nodes, using the pre-allocated time slot. In addition, the sender means includes a node-unique add wavelength time-division sendingunit for sending, through one of the add ports, the upstream signal at a node-unique add wavelength, which is unique to the individual optical node, using the pre-allocated time slot.

According to the present invention, the server node is capable of correctly receiving upstream signals sent from more than one client node, by means of one and the same drop port in a time division manner. Therefore, it is possible for the server node, the sender of multicast or broadcast distribution, to correctly receive an ACK signal according to IP or the like, so that bi-directional communication becomes available between the server node, which initiates the multicast or broadcast communication, and other client nodes.

In addition, since light at anode-common wavelength, used to transmit upstream signals from the client nodes, is blocked on the server node, it is possible to prevent the light at the node-common wavelength from continuously circulating around the optical ring network.

Other objects and further features of the present invention will be apparent from the following detailed description when read in conjunction with the accompanying drawings.

### BRIEF DESCRIPTION OF THE DRAWINGS

FIG. 1 is a block diagram showing a construction of a WDM ring network (optical ring network) according to a first preferred embodiment of the present invention;
FIG. 2 is a view schematically showing a signal path on the network of FIG. 1 for the purpose of describing an operation (signal transceiving method) of the network;
FIG. 3 is a block diagram showing a construction of the node-common add wavelength blocker switch of FIG. 1 and FIG. 2;
FIG. 4 is a block diagram showing a construction of an essential part of an OADM node of FIG. 1 and FIG. 2;
FIG. 5 is a block diagram showing a WDM ring network according to a first modification of the first embodiment;
FIG. 6 is a schematic view of a signal path on the network of FIG. 5 for the purpose of describing an operation (signal transceiving method) of the network;
FIG. 7 is a schematic view of a signal path on the network of FIG. 5 for the purpose of describing an operation (on occurrence of a failure) of the network;
FIG. 8 is a block diagram showing a construction of an essential part of an OADM node of FIG. 5;
FIG. 9(A) is a block diagram showing a construction of a work (current use) ring network according to a second modification of the first embodiment;
FIG. 9(B) is a block diagram showing a construction of a protection (backup) ring network according to the second modification of the first embodiment;
FIG. 10 is a block diagram showing a construction of an OUPSR according to the second modification of the first embodiment;
FIG. 11(A) is a view for describing an operation (at normal operation) of the OUPSR of FIG. 10;
FIG. 11(B) is a view for describing an operation (at occurrence of a failure) of the OUPSR of FIG. 10;
FIG. 12 is a block diagram schematically showing a construction of an OBLSR according to a third modification of the first embodiment;
FIG. 13(A) is a view for describing an operation (at normal operation) of the OBLSR of FIG. 12;
FIG. 13(B) is a view for describing an operation (at occurrence of a failure) of the OBLSR of FIG. 12;
FIG. 14 is a block diagram showing a construction of a WDM ring network (optical ring network) according to a second preferred embodiment of the present invention;
FIG. 15 is a view schematically showing a signal path on the network of FIG. 14 for the purpose of describing an operation (signal transceiving method) of the network;
FIG. 16(A) is a block diagram showing a construction of a previous WDM ring network;
FIG. 16(B) is a block diagram showing a construction of an essential part of an OADM node of FIG. 16(A);
FIG. 17(A) and FIG. 17(B) are views for describing an operation when multicast communication or broadcast communication is performed on the previous WDM ring network.

### DESCRIPTION OF THE PREFERRED EMBODIMENT(S)

### [A] First embodiment:

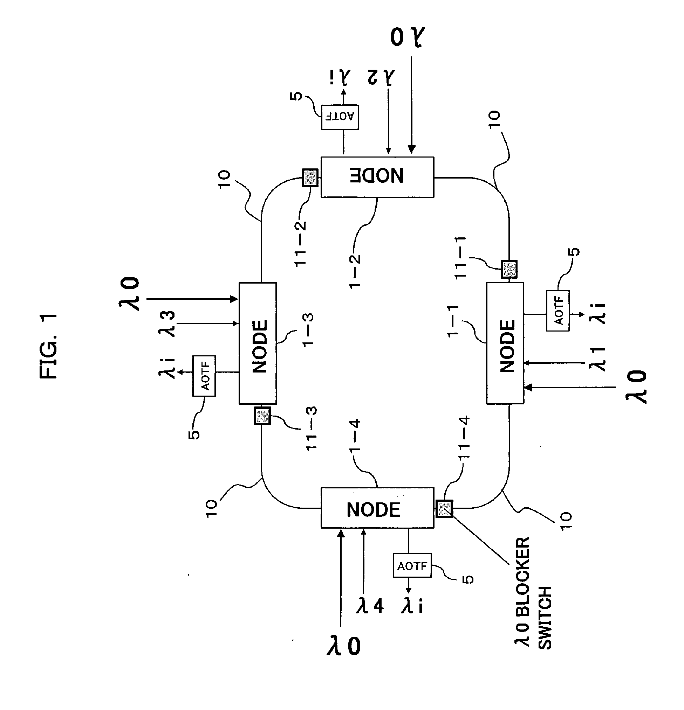

FIG. 1 is a block diagram showing a WDM ring network (optical ring network) according to a first embodiment of the present invention. The WDM ring network of FIG. 1 includes four OADM nodes (optical nodes), 1-1, 1-2, 1-3, and 1-4, connected via an optical transmission path 10 to form a ring configuration, and each node 1-i (*i* = 1 through 4) has a variable-wavelength filter (Acousto-Optic tunable filter: AOTF) 5 and a node-common add wavelength (λ0) blocker switch 11-i. Here, the AOTF 5 and the node-common add wavelength blocker switch 11-i, which are illustrated in FIG. 1, for convenience of description, as if they are arranged outside the node 1-i, are generally contained in the node 1-i in practice.

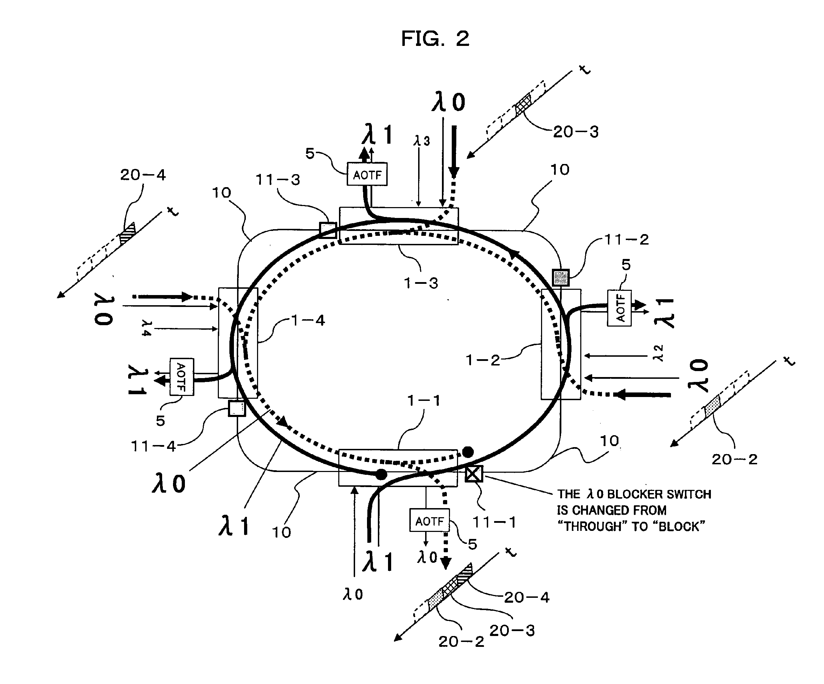

In this embodiment, all the nodes 1-i are provided with a common add wavelength (here, a wavelength of λ0). On each node 1-i, the node-common add wavelength port transmits data (an ACK signal according to IP, and so on) by time-division multiplexing, using a time slot assigned to the node 1-i. On a node (node 1-1, for example) that performs multicast communication or broadcast communication, its receiver port receives time-division multiplex data transmitted from other nodes 1-j (*j*≠*i*) in such time slots (see FIG. 2). This arrangement makes it possible for the node that performs multicast or broadcast communication to carry out both-way communication.

A description will be made hereinbelow of this system. In the following description, a node that performs multicasting or broadcasting will be called a "parent node (server node)" while a node that receives such multicast or broadcast signals will be called a "child node (client node)"; a signal stream from the server node to the client node will be called "downstream", while the opposite will be called "upstream."

On the downstream path, like in a previous system, the parent node sends the same signal at a transmission wavelength (for example, a wavelength of λ1, assuming the node 1-1 of FIG. 2 as a parent node), which is assigned to the parent node, to all the child nodes, 1-2, 1-3, and 1-4. On the child nodes, 1-2, 1-3, and 1-4, the signal at a wavelength of λ1 is received by an AOTF (wavelength selecting unit) 5. On the upstream path, TDMA (Time Division Multiple Access) access control is performed to prevent signal collision. That is, as shown in FIG. 2, the timing of signal transmission at each child node, 1-2, 1-3, and 1-4, is controlled in such a manner that upstream light signals at a node-common add wavelength of λ1 sent from the child nodes, 1-2, 1-3, and 1-4, are placed in specific time slots, 20-2, 20-3, and 20-4, respectively. Here, this access control can be performed by an upper apparatus such as an NMS (Network Management System) in a centralized manner. Alternatively, when upstream light signals from the child nodes are multiplexed in the ring network, transmission timing, determined with consideration given to transmission delay, can be sent from the terminating circuit of the parent node to the terminating circuit of the child node through the downstream line, thereby realizing the aforementioned access control.

Here, in the present embodiment, since each node 1-i is capable of adding light at a node-common wavelength of λ0, some arrangement needs to be prepared for preventing the node-common wavelength of λ0 continuously circulating around the ring network. The aforementioned node-common add wavelength blocker switch 11-i satisfies this requirement. That is, such a node-common add wavelength blocker switch (hereinafter will be simply called a "wavelength blocker") 11-i, which is capable of blocking light at a node-common wavelength of λ0 alone or transmitting all the wavelengths of light including the node-common wavelength of λ0, is equipped to every node 1-i, thereby preventing the continuous circulation of the node-common wavelength of λ0.

More precisely, as shown in FIG. 2, assuming that the node 1-1 serves as a parent node, its wavelength blocker 11-1 is so set as to block light only at a node-common wavelength of λ0, while the wavelength blockers, 11-2, 11-3, and 11-4, of other child nodes, 1-2, 1-3, and 1-4, respectively, are so set as to allow all the wavelengths of light, including the node-common wavelength of λ0, to pass therethrough, so that upstream light signals at the node-common wavelength of λ0 are blocked at the wavelength blocker 11-1 of the parent node 1-1 (other wavelengths are transmitted), and thereby, continuous circulation around the ring network is prevented. In a case where any of the other nodes, 1-2, 1-3, and 1-4, serves as a parent node, also, it is only necessary to set the wavelength blocker 11-i of the parent node 1-i into such a block condition and to set the wavelength blockers 11-j of other child nodes 1-j into such a through condition.

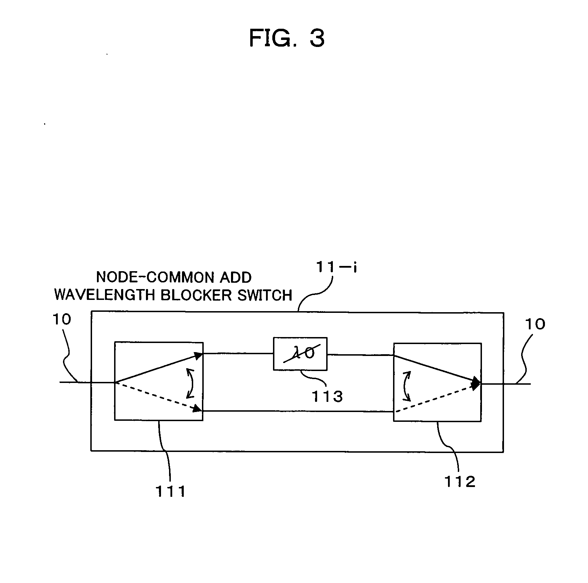

The wavelength blocker 11-i can be realized by a combination of a pair of 1x2 channel switches, 111 and 112, and a thin film filter 113, as shown in FIG. 3.

Here, upon receipt of incoming light from the optical ring network, the 1x2 channel switch (a first 1x2 optical switch) 111 outputs the light selectively to one of the two output ports. Of the one output of the 1x2 channel switch 111, the thin film filter (wavelength filter) 113 blocks light at a node-common wavelength of λ0. The 1x2 channel switch (second 1x2 optical switch) 112 selectively outputs either the output of the thin film filter 113 or the remaining one of the outputs of the 1x2 channel switch 111. These switches, 111 and 112, are so formed as to be switched into the same direction at the same time. Otherwise, an AOTF-utilized rejection filter is also applicable.

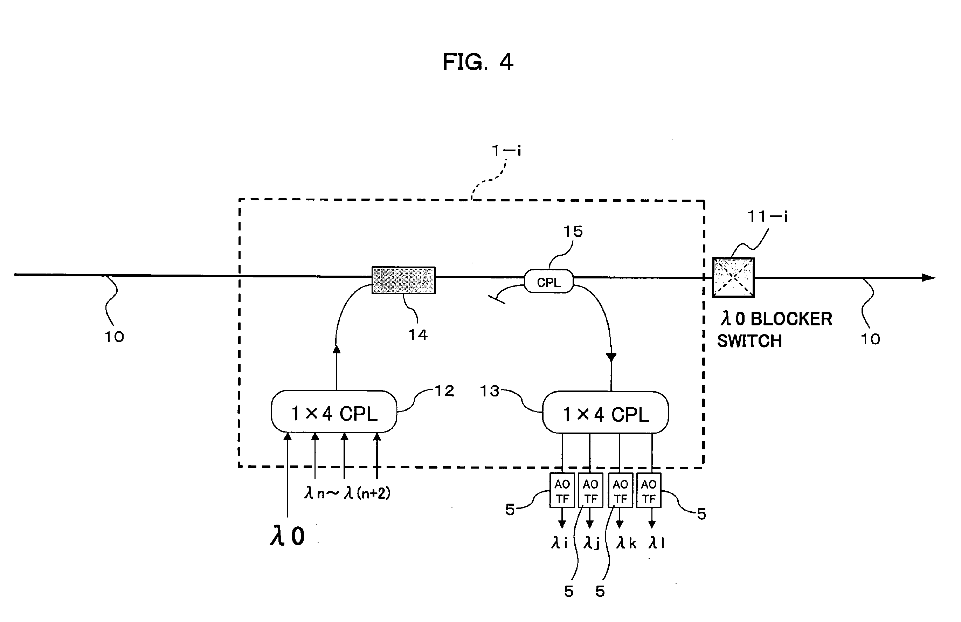

In order to simplify description, FIG. 1 and FIG. 2 depict nodes 1-i each having two sender (add) ports and one receiver (drop) port. However, if the nodes 1-i have four receiver ports and sender ports, for example, the arrangement of FIG. 4 can be employed.

In detail, each node 1-i has the following: a 1x4 optical coupler 12, arranged on the sender side, for combining add light at four wavelengths including a node-common wavelength; a rejection add filter 14 for adding the output light of the optical coupler 12 onto an optical path 10 and also for rejecting the add light (except for the node-common wavelength) that has been sent out from the node 1-i and that has traveled around the ring network; an optical coupler 15 for splitting part of the output light off from the output of the rejection add filter 14; a 1x4 optical coupler 13, arranged on the receiver side, for dividing the split light from the optical coupler 15 into four ports; and wavelength selecting filters (AOTFs) 5, one for each output (drop port) of the optical coupler 13.

On one of the AOTFs 5 a node-common wavelength of λ0 is selected, thereby making it possible to receive time-division multiplex signals, sent from the child node 1-i, in a time division manner.

That is, on a parent node, 1x4 optical coupler 12 and rejection add filter 14 serve as a sender means, which sends a downstream signal at a node-unique add wavelength from one of its add wavelength ports to the optical ring network. On the other hand, on a child node, the 1x4 optical coupler 12 and rejection add filter 14 serve as a sender means (node-common add-wavelength time-division sending unit) which sends an upstream signal at a node-common wavelength of λ0, using a time slot pre-allocated to the child node, from one of its add wavelength ports to the optical ring network.

In the meantime, on the parent node, the optical coupler 13, the optical coupler 15, and the AOTF 5 serve as a receiver means (node-common add-wavelength time-division receiving unit), which time-divisionally receives, through one and the same drop port, upstream signals that are sent from the client nodes at a node-common wavelength of λ0 in pre-allocated time slots, in response to selection of the node-common wavelength of λ0 by the AOTF 5. On the other hand, on a child node, optical couplers 13 and 15, and the AOTF 5 serve as a receiver means for selectively receiving a downstream signal at an arbitrary wavelength through one of its drop ports.

### (A1) First modification

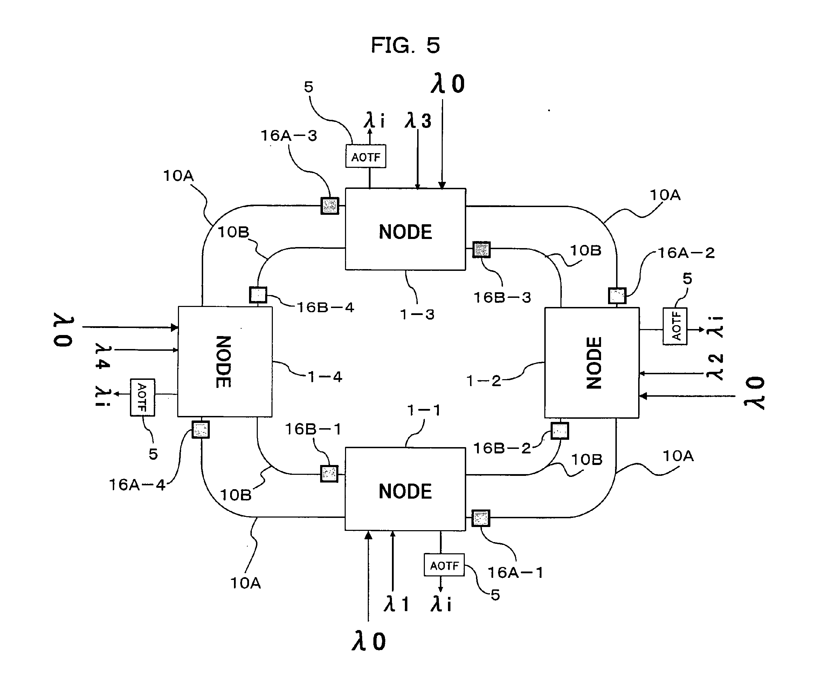

FIG. 5 schematically shows a WDM ring network according to a first modification of the first embodiment. In the ring network of FIG. 5, the nodes, 1-1, 1-2, 1-3, and 1-4, are connected via a couple of optical transmission paths, 10A and 10B, such as a dual-core fiber, and each of the nodes, 1-1, 1-2, 1-3, and 1-4, has network switches 16A-1 and 16B-1, 16A-2 and 16B-2, 16A-3 and 16B-3, 16A-4 and 16B-4, respectively, provided separately for the optical transmission paths, 10A and 10B. As in the case of the first embodiment, each node 1-i has a node-common wavelength of λ0 (a node-common wavelength add port) and a variable-wavelength filter (AOTF) 5.

On each node 1-i, an optical coupler combines light at an add wavelength of λi, which is assigned to the individual node 1-i, and light at a node-common wavelength of λ0. The combined light is then added by another optical coupler onto the optical transmission paths, 10A and 10B, to travel in opposite directions. On the other hand, all the wavelengths of light transmitted on the optical transmission paths, 10A and 10B, are input to the AOTF 5, which drops an arbitrary wavelength of light therefrom.

In this example, the foregoing node-common add wavelength time-division sending unit is formed such that the same signal is split into two at the add port and the split signals at the aforementioned node-common wavelength are sent out to the optical ring network to travel in both directions. In the meantime, the foregoing node-common add wavelength time-division receiving unit is formed such that the light signals at the aforementioned node-common wavelength coming in from both directions are combined and then selectively received.

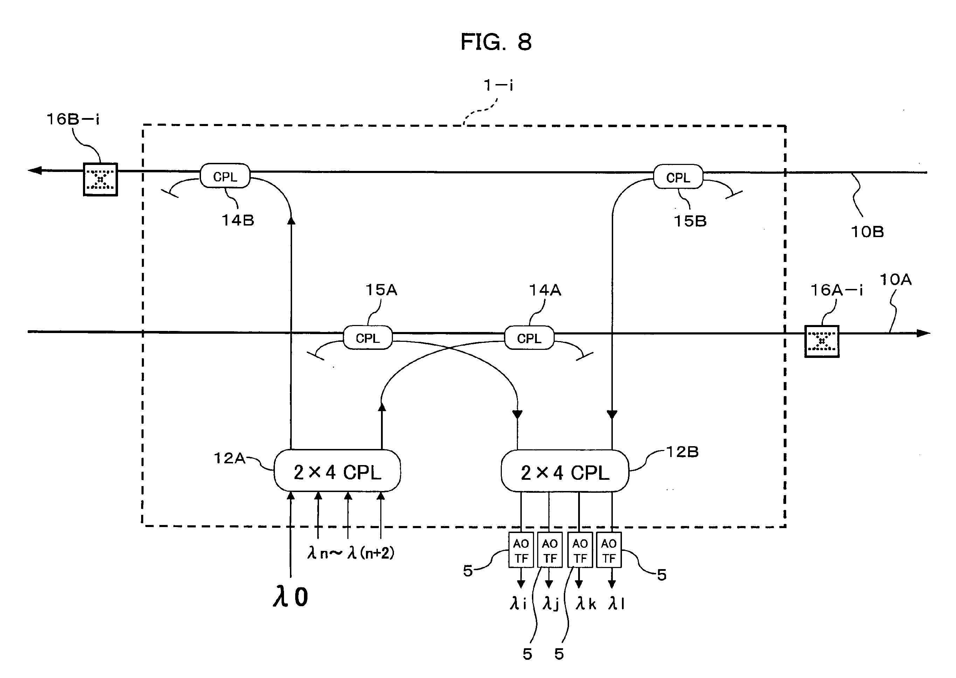

For instance, provided that each node 1-i has four add ports and drop ports, as shown in FIG. 8, the 2x4 optical coupler 12A multiplexes light at four wavelengths, including a node-common wavelength of λ0, and then the optical couplers, 14A and 14B, add the light onto the optical transmission paths, 10A and 10B, to travel in opposite directions. On the other hand, the optical couplers, 15A and 15B, drop the WDM signals from both the optical transmission paths, 10A and 10B, respectively, to input the signals into the 2x4 optical coupler 12B, which then divides the WDM signals into four optical paths to input, one to each AOTF 5.

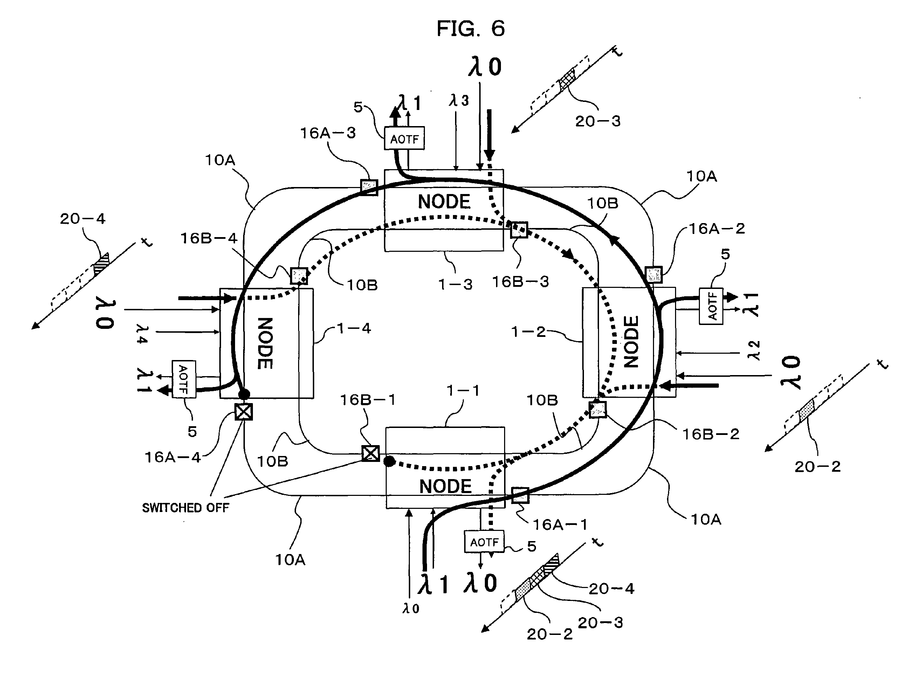

This arrangement realizes bi-directional multicast or broadcast communication with signal paths schematically shown in FIG. 6. In this case, however, both the network switch 16A-4, provided for the child node 1-4 on the optical transmission path 10A, and the network switch 16B-1, provided for the parent node 1-1 on the optical transmission path 10B, are switchedoff (all wavelengths blocked) (other network switches are switched on). In other words, the nodes 1-1 and 2-4 are disconnected.

That is, from the parent node 1-1, a downstream signal at an add wavelength of λ1 is transmitted counterclockwise (see the solid arrow) through the optical transmission path 10A, and on each node, 1-2, 1-3, and 1-4, the AOTF 5 selectively receives the wavelength of λ1. At this time, although the parent node 1-1 also adds a downstream signal at the same wavelength of λ1 onto the optical transmission path 10B, the signal is not transmitted to the child node 1-4 because the network switch 16B-1 is OFF.

In the meantime, from each node, 1-2, 1-3, and 1-4, upstream signals at a node-common add wavelength of λ0 are transmitted clockwise (see the broken arrow) through the optical transmission path 10B, using predetermined time slots, 20-2, 20-3, and 20-4, respectively, and on the parent node 1-1, the AOTF 5 selectively receives the wavelength of λ0. In this manner, the upstream time-division multiplex signals from the child nodes, 1-2, 1-3, and 1-4, which are sent at the node-common add wavelength of λ0 in the time slots, 20-2, 20-3, and 20-4, are received in a time division manner.

Here, although each node, 1-2, 1-3, and 1-4, also adds light at the node-common add wavelength of λ0 onto the optical transmission path 10A to transmit the light in the direction opposite to the above, the parent node 1-1 never receives the light, which is transmitted on the optical transmission path 10A from the opposite direction, because the network switch 16A-4 of the child node 1-4 is OFF.

That is, the arrangement where the network switch 16A-4, provided for the child node 1-4, on the optical transmission path 10A is OFF, and also where the network switch 16B-1, provided for the parent node 1-1, on the optical transmission path 10B is OFF, is advantageous in that continuous circulation of the downstream signal wavelength λ1 and the upstream signal wavelength (node-common add wavelength) λ0 are prevented, and at the same time, in that receipt of the same signal twice, from the optical transmission paths, 10A and 10B, is avoided. This means that each node 1-i no longer requires such a rejection add filter 14 as has been described referring to FIG. 4 to avoid continuous circulation or repeated reception of the same signal, and just switching on/off of required network switches, 16A-i and 16B-i, can prevent such problems.

In this manner, with the present modification of the first embodiment, it is also possible to carry out bi-directional multicast or broadcast communication between the parent node 1-1 and the child nodes, 1-2, 1-3, 1-4. Even when the parent node is replaced by another node, 1-2, 1-3, 1-4, it is onlynecessary to switch on/off required network switches, 16A-i and 16B-i, as appropriate.

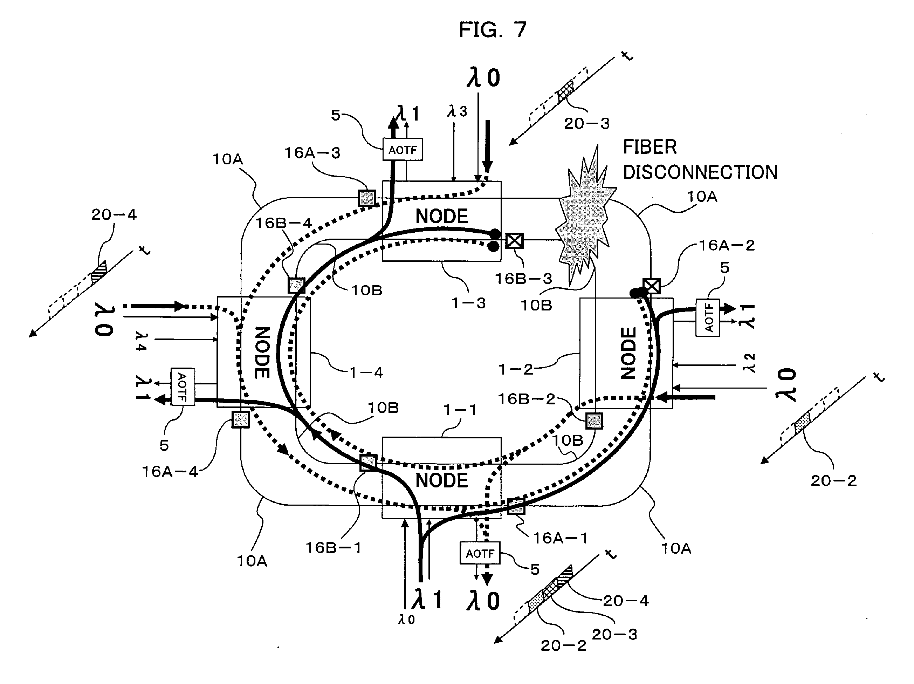

Further, with such a network construction, even if part of the network becomes unavailable (when the optical transmission paths, 10A and 10B, are broken) due to any damage (fiber break) or the like as shown in FIG. 7, it is still possible to establish bi-directional multicast or broadcast communication, while switching off the network switch 16A-2 of the node 1-2 and the network switch 16B-3 of the node 1-3 (other switches are ON), thereby making it possible to switch over to the protection line, following the signal path of FIG. 7.

Concretely, a downstream signal (multicast or broadcast signal) at an add wavelength of λ1, output from the parent node 1-1, is transmitted in both directions, one to the child node 1-2 and the other to the node 1-4 (see the solid arrow), through the optical transmission paths, 10A and 10B, respectively, and on each child node, 1-2, 1-3, 1-4, the downstream signal is selectively received by the AOTF 5. On the other hand, upstream signals output from the child nodes, 1-2, 1-3, and 1-4, are sequentially formed into time-division multiplex signals at a node-common add wavelength of λ0 and transmitted through the optical transmission path 10B in a clockwise direction (see broken arrow). On the parent node 1-1, the AOTF 5 drops the light at the node-common add wavelength of λ0 to receive the upstream signals in a time division manner. Likewise, even if a break occurs somewhere else between another pair of nodes, the network switches, 16A-i and 16B-i, arranged on broken optical transmission paths, 10A and 10B, are only required to be switched off while the others are ON.

In this manner, according to the present embodiment and its modification, the following advantages are realized at low cost, with a compact configuration.
(1) Child nodes 1-j perform access control utilizing a node-common add wavelength of λ0 and the TDMA system, thereby making it possible for the parent node 1-i to properly receive upstream signals from the child node 1-i through one and the same drop port. It is thus possible to perform multicast or broadcast distribution of signals that require ACK signals according to IP or the like, on an optical layer. That is, it is possible for the parent node, which is the source of the multicast or broadcast distribution, to receive such ACK signals properly, and bi-directional communication becomes available between the parent node (sender node), the origin of the multicast or broadcast communication, and other child nodes (receiver nodes). Accordingly, a network suitable for use in image (including both of motion pictures and static picture images) delivery or broadcast-type services will be provided.
(2) It is possible for an arbitrary node 1-i, as a parent node, to multicast and broadcast data. Referring to FIG. 2, FIG. 6, and FIG. 7, the description has been made on an example where the node 1-1 serves as a parent node to send a multicast signal (or a broadcast signal) at a node-common add wavelength of λ0, which is then received by other nodes that serve as child nodes, 1-1, 1-2, and 1-3. However, all the nodes 1-i can serve as a parent node to initiate multicast or broadcast communication, by changing which one of the wavelength blockers 11-i is set into a block state, and/or by changing which ones of the network switches, 16A-i and 16B-i, are set to an OFF state.

### (A2) Second modification

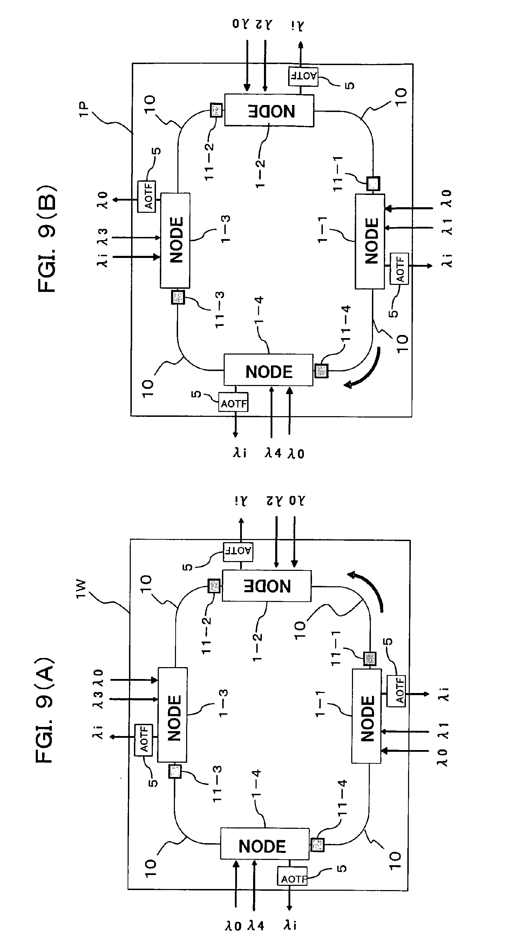

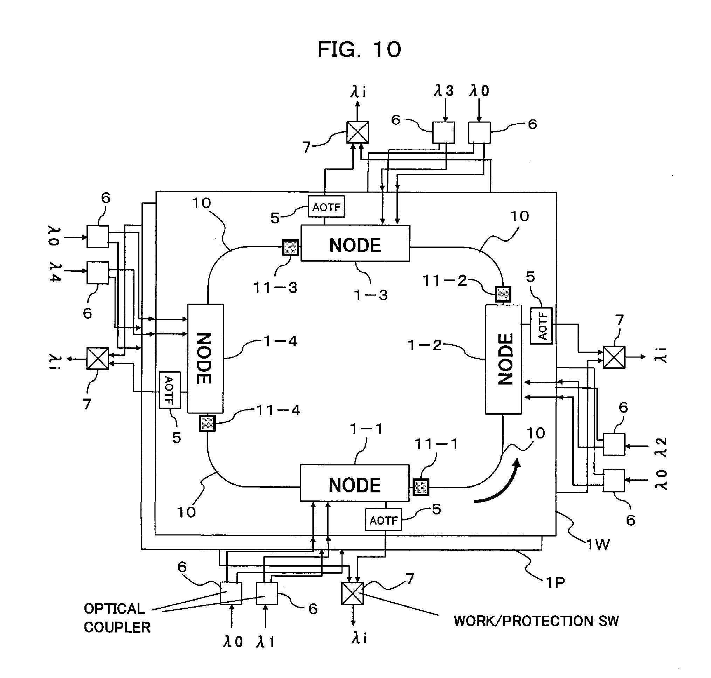

FIG. 9(A) and FIG. 9(B) show schematic views of a second modification of the above-described second embodiment. FIG. 9(A) depicts a construction of a ring network of current use (work); FIG. 9 (B) depicts a stand-by (protection) ring network. As shown in FIG. 9(A) and FIG. 9 (B), each of the work ring network 1W and the protection ring network 1P is identical in construction to the ring network of FIG. 1 except that WDM signals are transmitted in two opposite directions. For instance, as shown in FIG. 10, on each node 1-i, optical couplers 6 split light at a node-common wavelength (λ0) and light at a pre-assigned wavelength (λ1, λ2, λ3, or λ4) each into two, one of which is then added onto the optical transmission path 10 of the work ring network 1W and the other, onto the optical transmission path 10 of the protection ring network 1P. Frombothringnetworks, 1W and 1P, on which such WDM signals are transmitted in opposite directions, light at the same arbitrary wavelength of λi is selectively received by the AOTF 5, and either of the two streams of light at the drop wavelength of λi is selected by the work/protection switch 7.

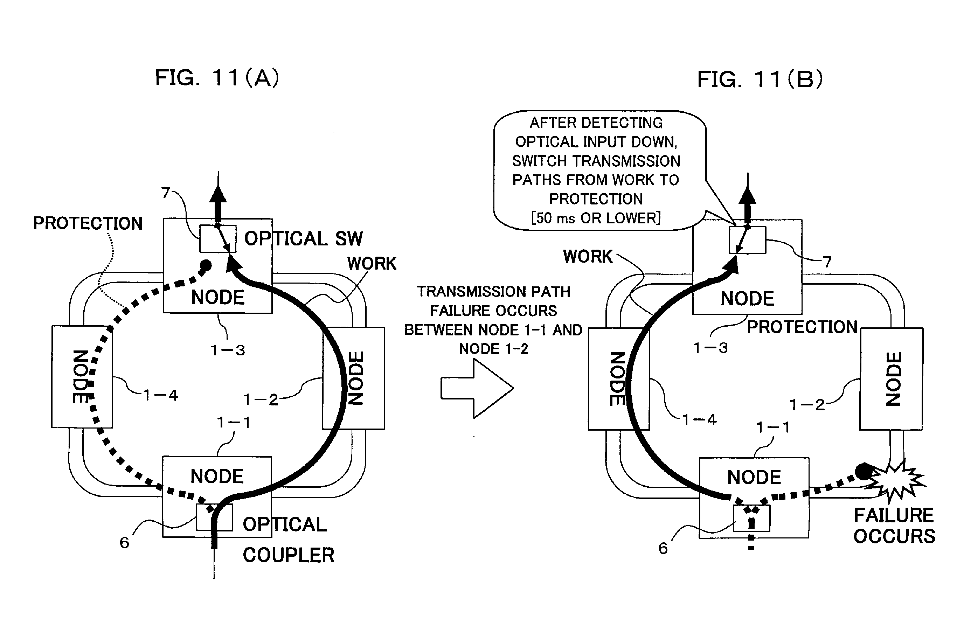

This arrangement realizes an OUPSR (Optical Unidirectional Path Switched Ring). That is, as shown in FIG. 11(A), during normal operation, the node 1-1, as the sender end, sends WDM signals in both directions through each ring network 1W, 1P, and on the node 1-3, as the receiver end, the work/protection switch 7 selects either (for example, the one with higher signal quality) of the light transmitted on the ring network 1W and the light transmitted on the ring network 1P, both having the same wavelength of λi.

If communication becomes unavailable between the node 1-1 and the node 1-2 due to any failure therebetween as depicted in FIG. 11(B), the work/protection switch 7 of the node 1-3 is switched to selectively receive the light at the wavelength λi coming from the direction opposite to the direction that has been selected so far. Such transmission path switching is performed within a very short time, such as 50 ms or shorter. In addition, even if failure occurs between other nodes, on the node 1-i, as the receiver end, the work/protection switch 7 is likewise switched to cope with the failure.

### (A3) Third embodiment

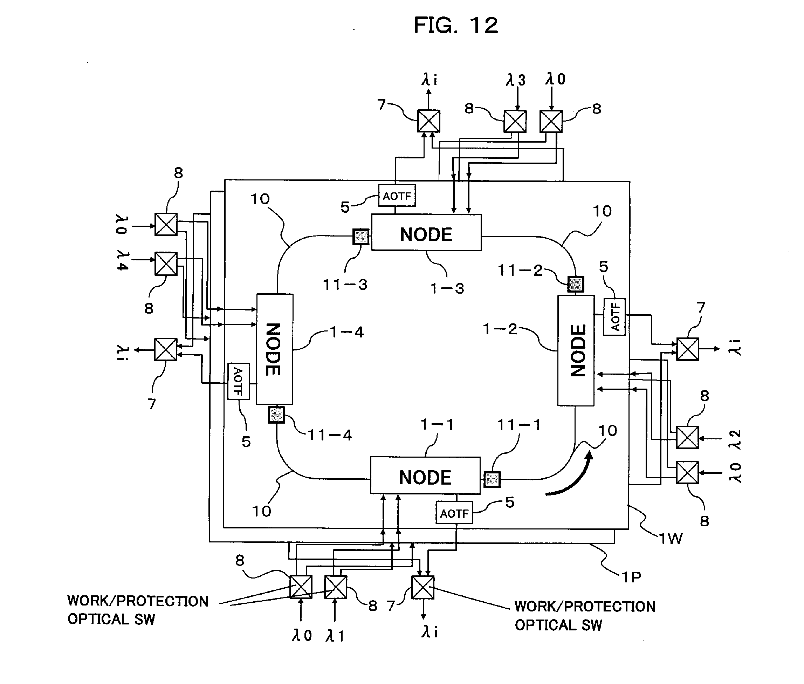

Although the work ring network 1W and the protection ring network 1P form an OUPSR in the foregoing example, an OBLSR (Optical Bi-directional Line Switched Ring) can also be formed as shown in FIG. 12. More precisely, in place of the optical couplers 6, having been described with reference to FIG. 10, work/protection switches 8 are provided, thereby making it possible to send out light at a node-common wavelength of λ0 and light at an add wavelength of λ1, λ2, λ3, or λ4 selectively to one of the ring networks 1W and 1P. Like reference numbers and characters designate similar parts or elements throughout several views of the present embodiment and the conventional art unless otherwise described, so their detailed description is omitted here.

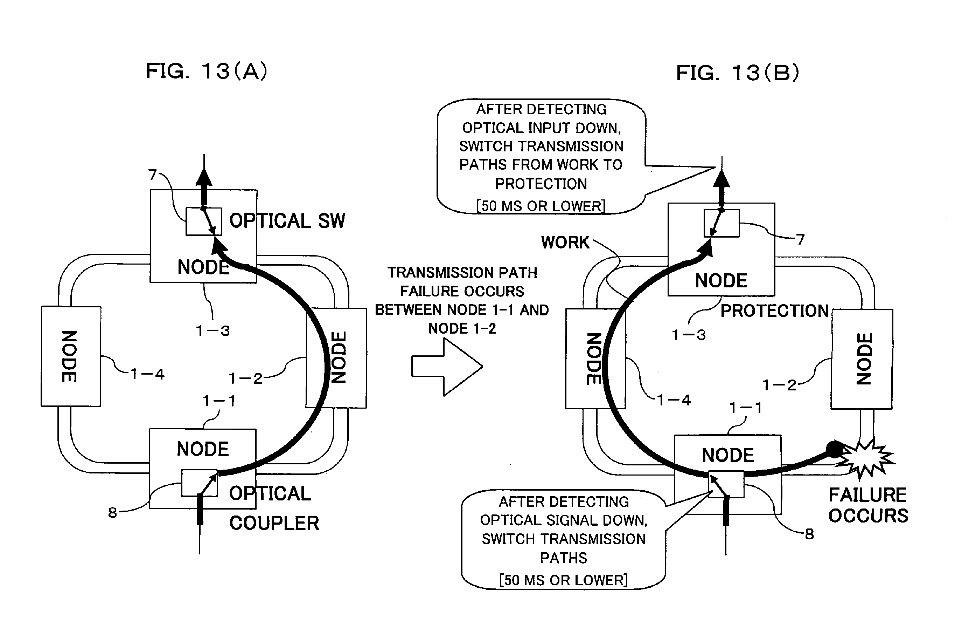

With this arrangement, as shown in FIG. 13 (A), during normal operation, on the node 1-1, the work/protection switch 8 is switched to the work ring network 1W to transmit thereon WDM signals, including a node-common wavelength of λ0, in a counterclockwise direction. On the node 1-3, the work/protection switch 7 selects the work ring network 1W to selectively receive the light at a wavelength of λi therefrom by means of an AOTF 5.

As shown in FIG. 13 (B), for example, if any failure occurs between the node 1-1 and the node 1-2, on the node 1-1 the work/protection switch 8 is switched to a position where WDM signals, including a node-common wavelength of λ0, are transmitted in the direction (clockwise) opposite to the direction that has been selected so far. On the node 1-3, the work/protection switch 7 selects the protection ring network 1p to selectively receive the light at a wavelength of λi therefrom by means of an AOTF 5. Here, transmission path switching on the node 1-1 and the node 1-3 is performed within a very short time, such as 50 ms or shorter. In addition, even if failure occurs between other nodes, on each of the nodes on the sender end and the receiver end the work/protection switches, 7 and 8, are likewise switched to cope with the failure.

In this manner, according to the above second and third modifications, the ring network in which bi-directional multicast or broadcast communication between arbitrary nodes 1-i is available is made redundant to form OUPSR or OBLSR, thereby improving communication reliability.

### [B] Second embodiment:

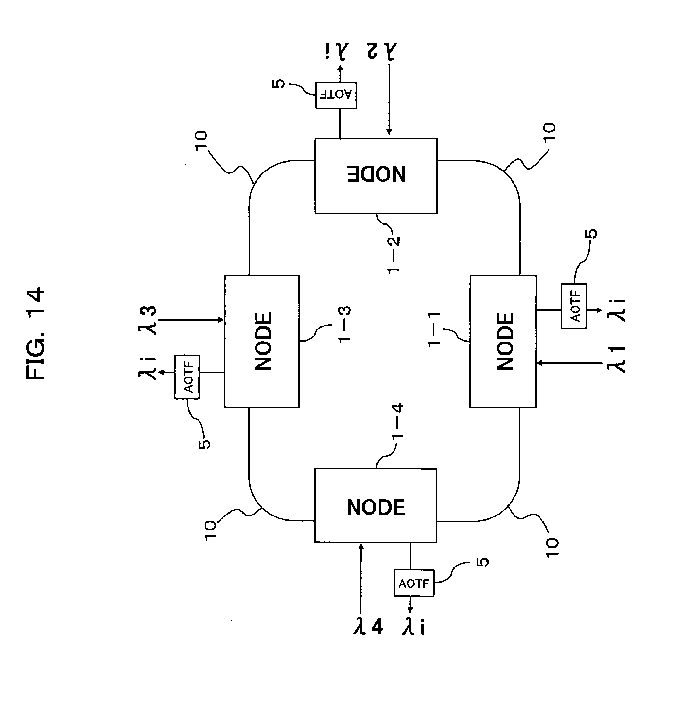

FIG. 14 is a block diagram showing a WDM ring network according to a second embodiment of the present invention. In the WDM ring network of FIG. 14, bi-directional multicast or broadcast communication, like in the first embodiment, is realized between arbitrary nodes 1-i, but without using the node-common wavelength of λ0.

More precisely, an individual add wavelength (λj) port, unique to each child node 1-j, sends an upstream signal by time-division multiplexing using a time slot assigned to the individual child node 1-j. On the receiver (drop wavelength) port of the parent node 1-i, which performs multicast or broadcast distribution, the AOTF 5 selects different wavelengths, one by one, in synchronization with the timing of the time slots, to transmit the selected wavelength therethrough, so that the upstream signals at node-unique add wavelengths (λj) sent from child nodes 1-j are received in a time division manner.

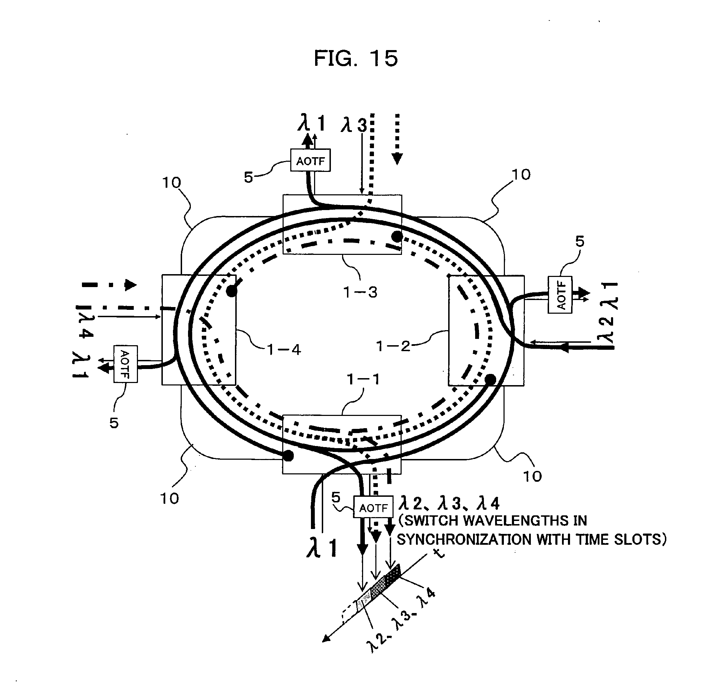

For instance, as schematically shown in FIG. 15, the parent node 1-1, similarly to the first embodiment, sends a downstream signal at its node-unique add wavelength of λ1 to each child node, 1-2, 1-3, and 1-4. On the other hand, the child nodes, 1-2, 1-3, and 1-4, send upstream signals at their node-unique wavelengths of λ2, λ3, and λ4, respectively, using time slots previously assigned to them. In other words, each child node, 1-2, 1-3, and 1-4, has a sender means (node-unique add wavelength time-division sending unit) for sending, through one of its add ports, an upstream signal at a node-unique add wavelength, which is unique to the individual node, 1-2, 1-3, and 1-4, using a time slot pre-allocated to the individual node, 1-2, 1-3, and 1-4.

In the meantime, on the parent node 1-1, WDM signals transmitted through the optical transmission path 10 are input to the AOTF 5, which is switched to select the wavelengths, one by one, in the order of λ4, λ3, and λ2, in synchronization with the forgoing time slots, the upstream signals from the child nodes, 1-2, 1-3, and 1-4, being thereby received correctly. In other words, the parent node 1-1 has a receiver means (wavelength time-division selection receiving unit) that time-divisionally receives, through one and the same drop port, upstream signals, which have been sent in pre-allocated time slots from the child nodes, 1-2, 1-3, and 1-4, at node-unique add wavelengths of λ2, λ3, and λ4, respectively, by switching the AOTF 5 to sequentially select the node-unique add wavelengths of λ2, λ3, and λ4, one by one, in synchronization with the time slots.

At this time, if any other node, 1-2, 1-3, or 1-4, than the node 1-1 serves as a parent node, it is only necessary to perform such switching (selecting) of the wavelength passing through the AOTF 5 on the parent node.

In this manner, according to the present embodiment, each child node 1-j sends an upstream signal at its node-unique add wavelength of λj, using its pre-allocated time slot. On the parent node 1-i, which performs multicast or broadcast distribution, the AOTF 5 sequentially selects (switches) the wavelengths, one by one, in synchronization with the timing of the time slots. As a result, it is possible to correctly receive the upstream signals sent, one from the child nodes 1-j, at their node-unique add wavelengths (λj), so that bi-directional multicast or broadcast communication is realized between arbitrary nodes 1-i, with no use of a node-common add wavelength of λ0, thereby realizing efficient use of WDM channels.

### [C] Other Modifications:

The optical ring networks of the above-described examples can be modified in number of nodes and number of wavelengths, and even with such modifications, like effects and benefits to those of the foregoing embodiments and their modifications will also be realized.

Further, the present invention should by no means be limited to the above-illustrated embodiment, but various changes or modifications may be suggested without departing from the gist of the invention.

For instance, access control for sending an upstream signal at a node-common wavelength of λ0 can be performed utilizing ATM (Asynchronous Transfer Mode) cells, instead of time slots. In that case, each ATM cell can store, in its header or the like, identification information of the child node from which the ATM cell has been sent. As a result, the parent node is capable of recognizing the sender of the upstream signal, thereby making it possible to perform bi-directional multicast or broadcast communication like in the above examples.

Further, the node-common wavelength of λ0 can be used not only for sending an ACK signal but also for sending a user signal or a maintenance and monitoring control signal while the channel is not being used.

According to the present invention, as has been described above, the server node is capable of correctly receiving upstream signals, which signals are sent from more than one client node, through one and the same drop port in a time division manner. Therefore, it is possible for the server node, the sender of multicast or broadcast distribution, to correctly receive an ACK signal according to IP or the like, so that bi-directional communication becomes available between the server node, which initiates the multicast or broadcast communication, and other client nodes. Accordingly, the present invention is greatly useful to realize an optical network suitable for use in providing image delivery or a broadcasting type of service.

## Claims

1. A signal transceiving method for use in an optical ring network to which more than one optical nodes (1-1, 1-2, 1-3, 1-4), each with a plurality of add ports and drop ports, are connected, one of the optical nodes (1-1, 1-2, 1-3, 1-4) serving as a server node (1-1), which sends a downstream signal to other nodes serving as client nodes (1-2, 1-3, 1-4), said method comprising the steps of:
on the individual client nodes (1-2, 1-3, 1-4),
selectively receiving the same downstream signal at an identical wavelength (λi) through one of the plural drop ports;
sending an upstream signal at a specific wavelength (λ0, λ2, λ3, or λ4) to the optical ring network through one of the plural add ports; and
on the server node (1-1),
receiving such upstream signals sent, one from each of the client nodes (1-2, 1-3, 1-4) at the specific wavelength (λ0, λ2, λ3, or λ4), through a single one of the drop ports in a time division manner.

2. A signal transceiving method as set forth in claim 1,
wherein, on the individual client nodes (1-2, 1-3, 1-4), the upstream signals are sent in pre-allocated time slots (20-2, 20-3, 20-4) at a node-common wavelength (λ0), which is assigned as the specific wavelength, and
wherein, on the server node (1-1), the upstream signals at the node-common wavelength (λ0) is selectively received, and the upstream signals in the pre-allocated time slots are received by the single drop port.

3. A signal transceiving method as set forth in claim 1 or claim 2, further comprising the step of blocking light at the node-common wavelength (λ0), on the server node (1-1).

4. A signal transceiving method as set forth in claim 1,
wherein, on each of the client nodes (1-2, 1-3, 1-4), the upstream signal is sent in a time slot (20-2, 20-3, or 20-4), pre-allocated to the individual client node, at a node-unique add wavelength (λ2, λ3, or λ4), which is assigned as the specific wavelength, the add wavelength being unique to the individual client node, and
wherein, on the server node (1-1), the wavelengths (λ2, λ3, λ4), each to be selectively received by the single drop port, are switched in synchronization with the time slots so as to receive the upstream signals, sent from the client nodes (1-2, 1-3, 1-4) at the node-unique add wavelengths (λ2, λ3, λ4), through the single drop port in a time division manner.

5. An optical node (1-1) with a plurality of add ports and drop ports for use as a server node in an optical ring network to which more than one such optical nodes (1-2, 1-3, 1-4) are connected as client nodes, said optical node (1-1) comprising:
a sender means which sends a downstream signal at a node-unique add wavelength (λ1) through one of the plural add ports, the node-unique add wavelength (λ1) being unique to the individual optical node (1-1); and
a receiver means which receives upstream signals sent, one from each of the client nodes (1-2, 1-3, 1-4) at a specific wavelength (λ0, λ2, λ3, or λ4), through a single one of the drop ports in a time division manner.

6. An optical node as set forth in claim 5, wherein said receiver means includes:
a wavelength selecting unit (5) for selecting a wavelength of light to be received through the single drop port; and
a node-common add-wavelength time-division receiving unit for time-divisionally receiving, through the single drop port, the upstream signals sent in pre-allocated time slots (20-2, 20-3, 20-4) from the client nodes (1-2, 1-3, 1-4) at a node-common wavelength (λ0), in response to selecting the node-common wavelength (λ0) by said wavelength selecting unit (5), the node-common wavelength (λ0) being assigned, as the specific wavelength, to all the optical nodes (1-1, 1-2, 1-3, 1-4) in common.

7. An optical node as set forth in claim 5, wherein said receiver means includes:
a wavelength selecting unit (5) for selecting a wavelength of light to be received through the single drop port; and
a wavelength time-division selection receiving unit for time-divisionally receiving, through the single drop port, the upstream signals sent in pre-allocated time slots (20-2, 20-3, 20-4) from the client nodes (1-2, 1-3, 1-4) at the node-unique add wavelengths (λ2, λ3, λ4), in response to selecting such node-unique add wavelengths (λ2, λ3, λ4) by said wavelength selecting unit (5) in synchronization with the time slots (20-2, 20-3, 20-4).

8. An optical node (1-2, 1-3, or 1-4) with a plurality of add ports and drop ports for use as a client node in an optical ring network, said optical node (1-2, 1-3, or 1-4) comprising:
a receiver means which selectively receives a downstream signal at an arbitrary wavelength (λi) through one of the plural drop ports; and
a sender means which sends, through one of the plural add ports, an upstream signal at a specific wavelength (λ0, λ2, λ3, or λ4) to the optical ring network, using a time slot (20-2, 20-3, or 20-4) pre-allocated to said client node (1-2, 1-3, or 1-4).

9. An optical node as set forth in claim 8, wherein said sender means includes a node-common add wavelength time-division sending unit for sending, through said one of the add ports, the upstream signal at a node-common wavelength (λ0), which is common to all the optical nodes (1-1, 1-2, 1-3, 1-4), using the pre-allocated time slot (20-2, 20-3, or 20-4).

10. An optical node as set forth in claim 8, wherein said sender means includes a node-unique add wavelength time-division sending unit for sending, through said one of the add ports, the upstream signal at a node-unique add wavelength (λ2, λ3, λ4), which is unique to the individual optical node (1-2, 1-3, or 1-4), using the pre-allocated time slot (20-2, 20-3, or 20-4).

11. An optical node as set forth in claim 6 or claim 9, further comprising a node-common add wavelength blocker switch (11-1, 11-2, 11-3, or 11-4) for blocking or transmitting light at the node-common wavelength (λ0), which is sent from another of the optical nodes connected to the optical ring network.

12. An optical node as set forth in claim 11, wherein said node-common add wavelength blocker switch (11-1, 11-2, 11-3, or 11-4) includes:
a first 1×2 optical switch (111) for receiving light transmitted over the optical ring network and outputting the received light selectively to one of two outputs;
a wavelength filter (113) for blocking light at the node-common wavelength (λ0), of the light output from the one of the two outputs of said first 1×2 optical switch (111); and
a second 1×2 optical switch (112) for selectively outputting either the output of said wavelength filter (113) or a remaining one of the outputs of said first 1x2 optical switch (111).

13. An optical node as set forth in claim 9, wherein said node-common add wavelength time-division sendingunit sends, through the add wavelength port, the upstream signal at the node-common wavelength (λ0) in both directions over the optical ring network.

14. An optical node as set forth in claim 6, wherein said node-common add wavelength time-division receiving unit selectively receives light at the node-common wavelength (λ0) transferred in either direction over the optical ring network.

15. An optical node as set forth in claim 13 or claim 14, further comprising a network switch (16A-1, 16A-2, 16A-3, 16A-4, 16B-1, 16B-2, 16B-3, or 16B-4) for blocking or transmitting one or both of transmission light beams, which are transferred over the optical ring network in respective directions.
